# FASCICULE DE BREVET EUROPEEN

(11) **EP 4 466 392 B1**
(45) Date de publication et mention de la délivrance du brevet: **01.04.2026**
(21) Numéro de dépôt: 23704381.5
(22) Date de dépôt: 12.01.2023
(51) Int. Cl.: C25B 1/042, H01M 8/2404, H01M 8/2432, C25B 9/75, C25B 9/77, H01M 8/12

(54) **ENSEMBLE COMPORTANT UN EMPILEMENT DE CELLULES À OXYDES SOLIDES DE TYPE SOEC/SOFC ET DES ÉLÉMENTS DE GUIDAGE EXTERNES**
ANORDNUNG MIT EINEM STAPEL AUS SOEC/SOFC-FESTOXIDZELLEN UND ÄUSSEREN FÜHRUNGSELEMENTEN
ASSEMBLY COMPRISING A STACK OF SOEC/SOFC SOLID OXIDE CELLS AND OUTER GUIDING ELEMENTS

(30) Priorité: 17.01.2022 FR 2200370
(43) Date de publication de la demande: 27.11.2024
(73) Titulaire: Commissariat à l'Energie Atomique et aux Energies Alternatives, 75015 Paris (FR)
(72) Inventeur: DI IORIO, Stéphane, 38054 GRENOBLE CEDEX 09 (FR); MONNET, Thibault, 38054 GRENOBLE CEDEX 09 (FR); GERVASONI, Bastien, 38054 GRENOBLE CEDEX 09 (FR); GILLIA, Olivier, 38054 GRENOBLE CEDEX 09 (FR); VULLIEZ, Karl, 38054 GRENOBLE CEDEX 09 (FR)
(74) Mandataire: Santarelli
(86) Numéro de dépôt international: PCT/FR2023/050044
(87) Numéro de publication internationale: WO 2023/135393

(56) Documents cités:
- CN-A- 113 782 802
- DATABASE WPI Derwent World Patents Index; AN 2021-E9634D, XP002807937

## Description

### DOMAINE TECHNIQUE

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de la vapeur d'eau et du dioxyde de carbone (CO₂) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comportant un empilement de cellules à oxydes solides de type SOEC/SOFC et des éléments de guidage externes, ainsi qu'un procédé de conditionnement associé.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) ou d'autres combustibles tels que le méthane (CH₄), le gaz naturel, le biogaz, et en dioxygène (O₂), typiquement en air. Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone (CO₂), voire encore de la co-électrolyse de la vapeur d'eau à haute température avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de la vapeur d'eau à haute température (EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le combustible.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

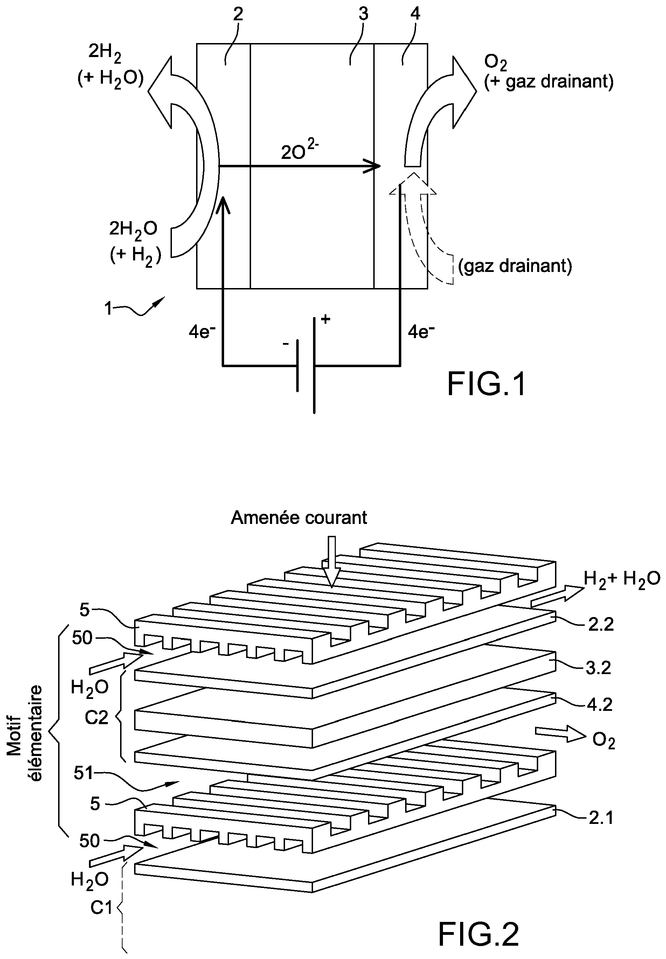

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂+ 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Afin de garantir un bon contact électrique entre l'ensemble des interconnecteurs, les cellules électrochimiques et les interconnecteurs sont enserrées entre deux plaques rigides, appelées plaque terminale supérieure et plaque terminale inférieure, isolées électriquement des interconnecteurs. Le sandwich ainsi formé est appelé « stack », et correspond ainsi à l'ensemble comprenant les plaques terminales supérieure et inférieure, les cellules électrochimiques et les interconnecteurs. Ce stack doit être maintenu sous un effort de compression pour assurer la bonne continuité électrique des plans de contacts entre les plaques.

Durant la première phase de fabrication des empilements ou stacks, on procède à la formation du scellement vitrocéramique en faisant subir au stack un cycle thermique tout en appliquant un effort de compression contrôlé sur l'empilement. Ce cycle thermique s'appelle le cycle de conditionnement.

En effet, les diverses étanchéités entre circuits sont assurées par des joints en verre fondu. Ce verre fondu est obtenu par dépôt de barbotine, précurseur du verre. La barbotine est déposée sous forme de cordons en sandwich entre les plaques d'interconnexion (ou interconnecteurs). Cette barbotine sèche ensuite sur place pour donner lieu à un cordon constitué de liants de poudres de verre. Ainsi, à froid, avant le cycle de montée en température qui formera le verre, les plaques d'interconnexion sont séparées par des cordons de barbotine séchée. Ces cordons fondront lors du cycle de chauffe, et les contacts s'établiront au niveau des zones réactives décrites précédemment. La fusion des cordons peut résulter en une réduction de plus de 50 % de l'épaisseur du cordon de barbotine. Ces cordons peuvent aussi être constitués de verre déjà densifié, en sandwich entre deux interconnecteurs successifs de l'empilement. Tout comme lors du cycle de conditionnement avec cordons de barbotine séchée, la fusion du joint en verre va provoquer l'affaissement de l'espace entre les interconnecteurs, mais dans une moindre mesure qu'avec la barbotine.

Dans tous les cas, il est important d'assurer un guidage selon une direction perpendiculaire au plan des interconnecteurs, soit encore colinéaire à la direction de l'effort de compression des plaques d'interconnexion et des plaques terminales. Un tel guidage permet de garantir que, lors de l'affaissement du stack, qui se produit lors de la formation du verre, les pièces constitutives du stack (notamment interconnecteurs, plaques d'isolant, plaques terminales) restent correctement alignées les unes par rapport aux autres. Durant cette phase, la hauteur du stack diminue de pratiquement 50 % et se traduit donc par un important mouvement vertical de l'empilement.

Le développement des systèmes industriels intégrant des électrolyseurs haute température passe par un accroissement du volume de gaz traité (en SOEC ou SOFC). Pour ce faire, l'augmentation de la surface, du nombre des cellules et des interconnecteurs, est nécessaire. Or, un accroissement significatif du nombre de plaques et donc de la hauteur des stacks pose de nombreuses difficultés techniques, notamment durant les phases de fabrication. En effet, plus la hauteur des stacks est importante, plus la maîtrise du guidage devient critique.

Dans les conceptions actuelles, ce guidage est assuré par des colonnes cylindriques positionnées à l'intérieur de la structure du stack traversant les différentes plaques dans lesquelles sont usinées des trous cylindriques ou oblongs ajustés au diamètre des colonnes. La base de ces colonnes est mécaniquement bloquée dans la plaque terminale inférieure.

Ce type de dispositif présente différentes limitations liées aux faibles diamètres des colonnes de guidage imposés par la structure interne des interconnecteurs. L'obtention d'un guidage satisfaisant de nombreuses plaques fines sur de grandes hauteurs par ce type de colonnes implique une maîtrise fine des jeux relatifs entre les colonnes et les diamètres des trous de passage. Ce type de montage avec des jeux serrés expose au risque d'arcboutement en rotation qui peut se produire lors du cycle de la formation de la vitrocéramique de scellement, durant lequel le stack montre un affaissement significatif de sa hauteur. A noter que l'effort de appliqué pour assurer le contact des différentes plaques n'est pas si important, et donc que tout coincement intempestif des plaques par rapport à leurs éléments de guidage est problématique. De plus, ce type de guidage impose également des opérations de découpe des colonnes qui dépassent du stack après conditionnement, qui après le cycle thermique ne peuvent être démontées et restent au cœur du stack.

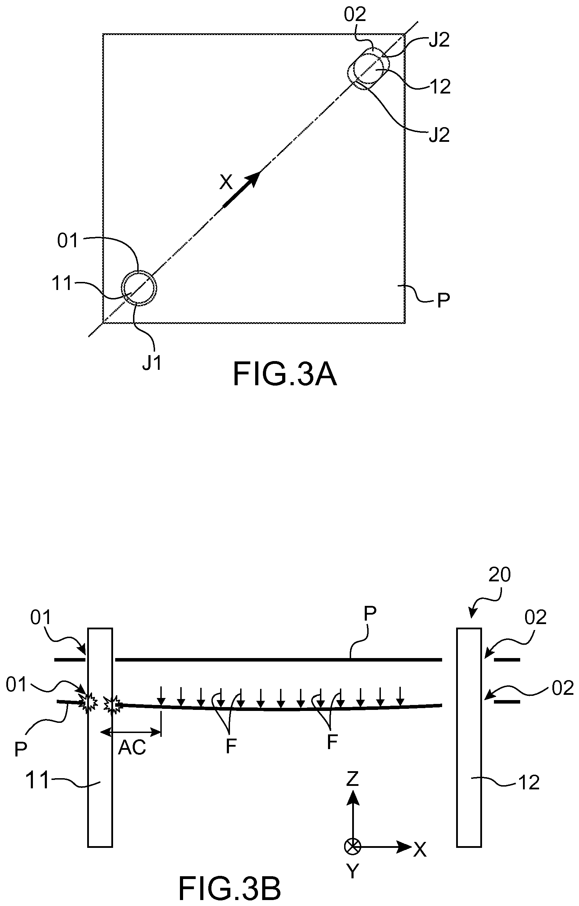

A titre d'illustration, les figures 3A et 3B représentent la solution actuelle de guidage. Deux colonnettes 11 et 12 sont employées pour guider les plaques P de l'empilement 20 ou stack (ici représenté très schématiquement) dans leur descente. Les plaques P peuvent être des plaques d'interconnexion, des plaques isolantes, ou encore les plaques terminales inférieure et supérieure. Ici, sur la figure 3B, on considère par exemple que sont représentées les plaques P terminales supérieure et inférieure, les autres plaques P enserrées entre celles-ci ne sont donc pas représentées. D'un côté, on utilise un orifice O1 de forme circulaire en section, et l'ajustement entre la plaque P et la colonnette 11 est très fin, par exemple de l'ordre de 0,1 mm de jeu J1. De l'autre côté, l'orifice O2 dans la plaque P est de forme oblongue en section, laissant un jeu J2 plus important. Alors, le fait d'appuyer au centre pour faire descendre les plaques P, comme selon les flèches F, au fur et à mesure de la fusion des joints vitrocéramiques peut provoquer une légère flexion de ces plaques P, et ainsi provoquer un blocage par arcboutement, représenté par AC sur la figure 3B, sur la colonne 11 sur laquelle l'ajustement est serré. Dans la pratique, afin d'éviter ces risques d'arcboutement AC, le jeu J1 autour de la colonne de guidage 11 peut être drastiquement augmenté, ce qui dégrade alors fondamentalement la fonction de guidage et n'est donc pas du tout souhaitable.

Le document DATABASE WPI, Thompson Scientific, LondonGB ; AN 2021-E9634D XP002807937 ainsi que le document CN113782802A décrivent tous deux des systèmes représentatifs de l'art antérieur et qui présentent les inconvénients identifiés.

Il existe ainsi un besoin pour proposer une solution de guidage efficace permettant d'éviter ce problème d'arcboutement tout en conservant une précision de guidage lors de l'affaissement de l'empilement de plaques ou stack.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un ensemble comportant :
- un empilement de cellules à oxydes solides de type SOEC/SOFC fonctionnant à haute température, constitué d'une pluralité de plaques empilées les unes sur les autres selon une direction verticale sensiblement perpendiculaire à chaque plan horizontal, d'étendue de chaque plaque, chaque plaque comportant une surface supérieure, une surface inférieure et une surface latérale externe,
ladite pluralité de plaques comportant au moins :
- une pluralité de cellules électrochimiques formées chacune d'une cathode, d'une anode et d'un électrolyte intercalé entre la cathode et l'anode, et une pluralité d'interconnecteurs agencés chacun entre deux cellules électrochimiques adjacentes,
- une plaque terminale supérieure et une plaque terminale inférieure, entre lesquelles la pluralité de cellules électrochimiques et la pluralité d'interconnecteurs sont enserrées,
- au moins deux éléments de guidage assurant le guidage en empilement vertical d'au moins une partie des plaques de l'empilement,
caractérisé en ce que lesdits au moins deux éléments de guidage s'étendent verticalement selon la direction verticale en appui contre la surface latérale externe de chaque plaque de ladite au moins une partie des plaques. Selon l'invention, au moins deux éléments de guidage peuvent être fixés par le biais d'un dispositif de fixation à une plaque d'appui inférieur sur laquelle est placé l'empilement et/ou à une plaque d'appui supérieur sous laquelle est placé l'empilement, et le dispositif de fixation peut comporter une embase de fixation, solidarisée à la plaque d'appui inférieur et/ou à la plaque d'appui supérieur, un organe de rappel élastique de compression, dont une extrémité est au contact d'un élément de guidage et l'autre extrémité est au contact de l'embase de fixation, et une vis de fixation montée sur l'embase.

L'ensemble selon l'invention peut en outre comporter l'une ou plusieurs des caractéristiques suivantes prises isolément ou suivant toutes combinaisons techniques possibles.

Chaque plan horizontal est notamment défini par des directions horizontales perpendiculaires entre elles.

### Lesdits.

L'organe de rappel élastique de compression peut être réalisé en alliage métallique, notamment en superalliage métallique, notamment à base de Nickel, par exemple en Inconel^{®} 718 ou 750, ou encore Haynes^{®} 230^{®}, ou encore en céramique, par exemple par fabrication additive, entre autres.

De plus, chaque élément de guidage peut comporter un dispositif d'appui coopérant avec le dispositif de fixation, comportant notamment au moins un plan d'appui de l'organe de rappel élastique de compression et une embase d'appui au contact de la plaque d'appui inférieur et/ou la plaque d'appui supérieur.

En outre, lesdits au moins deux éléments de guidage peuvent être au moins en partie de forme sensiblement cylindrique et peuvent présenter, en section transversale par rapport à la direction verticale, une forme sensiblement circulaire, triangulaire, triangulaire et semi-circulaire, carrée et/ou rectangulaire.

De plus, lesdits au moins deux éléments de guidage, notamment de forme rectangulaire en section, peuvent être répartis de façon régulière autour de chaque plaque, avec notamment un même nombre d'éléments de guidage par face de chaque plaque. Lesdits au moins deux éléments de guidage peuvent être présents en un nombre au moins égal à 4, voire 6, voire encore 8, voire plus, et notamment en un nombre pair. Dans le cas de 4 éléments de guidage, ceux-ci peuvent être positionnés de façon centrale par rapport à chaque face de la plaque. Dans le cas de 8 éléments de guidage, deux éléments de guidage peuvent être positionnés de part et d'autre de chaque angle d'une plaque à quatre angles.

Par ailleurs, chaque plaque de ladite au moins une partie des plaques peut comporter au moins deux encoches formées sur la surface latérale de la plaque dans lesquelles viennent en appui lesdits au moins deux éléments de guidage, notamment de forme circulaire, ovale ou en « V ».

Chaque encoche d'au moins une partie des encoches peut présenter une forme de « V » obtenue par la formation de deux plans tangents sur la surface latérale de la plaque.

La forme de « V » peut définir un angle compris entre 15° et 60°. De plus, la profondeur de la forme de « V », définie comme la hauteur du « V », entre la surface latérale et la réunion des deux plans tangents, peut être comprise entre 2 mm et 15 mm, notamment de l'ordre de 10 mm.

En outre, le nombre desdits au moins deux éléments de guidage peut être compris entre 2 et 12, notamment égal à 4.

Par ailleurs, au moins deux éléments de guidage peuvent être maintenus solidaires ensemble par le biais d'au moins un élément d'élasticité s'étendant sensiblement transversalement par rapport à la direction verticale.

Chaque élément d'élasticité peut comporter un élément coulissant pourvu d'une extrémité fixée à un élément de guidage, apte à coulisser à l'intérieur d'un élément fixe, pourvu d'une extrémité fixée à un autre élément de guidage, les éléments coulissant et fixe étant reliés entre eux par le biais d'au moins un organe de rappel élastique de traction.

De plus, lesdits au moins deux éléments de guidage peuvent être réalisés en au moins un matériau isolant électriquement.

En outre, l'invention a encore pour objet, selon un autre de ses aspects, un procédé de conditionnement d'un empilement de cellules à oxydes solides de type SOEC/SOFC fonctionnant à haute température d'un ensemble tel que défini précédemment, caractérisé en ce qu'il comporte l'étape de guidage en empilement vertical d'au moins une partie des plaques constitutives de l'empilement par le biais desdits au moins deux éléments de guidage.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] est une vue schématique montrant le principe de fonctionnement d'un électrolyseur à oxydes solides à haute température (SOEC),
[Fig. 2] est une vue schématique éclatée d'une partie d'un électrolyseur à oxydes solides à haute température (SOEC) comprenant des interconnecteurs selon l'art antérieur,
   - [Fig. 3A] et [Fig. 3B] représentent, schématiquement et partiellement, respectivement selon une vue du dessus et selon une vue latérale, un principe selon l'art antérieur de guidage des plaques d'un empilement de type SOEC/SOFC haute température,
   - [Fig. 4A] représente, selon une vue en perspective, un exemple d'ensemble conforme à l'invention comportant un empilement de type SOEC/SOFC haute température et quatre éléments de guidage,
   - [Fig. 4B] est une vue agrandie selon B1 de [Fig. 4A],
   - [Fig. 5] représente un détail de réalisation d'une encoche en forme de « V » sur les plaques de l'empilement de [Fig. 4A],
   - [Fig. 6] est une vue de détails du dispositif de fixation sur la plaque d'appui inférieur pour l'empilement de [Fig. 4A],
   - [Fig. 7] est une vue du dessus de [Fig. 6],
   - [Fig. 8] représente, en vue de face, la plaque terminale inférieure de l'empilement de [Fig. 4A],
   - [Fig. 9] représente, selon une vue en perspective, un élément de guidage de l'ensemble de [Fig. 4A],
   - [Fig. 10] représente, selon une vue en perspective, une variante de réalisation d'un élément de guidage,
   - [Fig. 11] représente, selon une vue en perspective, un autre exemple d'ensemble conforme à l'invention comportant un empilement de type SOEC/SOFC haute température et quatre éléments de guidage, dans lequel des éléments d'élasticité sont utilisés,
   - [Fig. 12] est une vue de dessus de [Fig. 11],
   - [Fig. 13A] représente, selon une vue en perspective, un exemple d'élément d'élasticité de l'ensemble de [Fig. 11],
   - [Fig. 13B] est une vue selon B2 de [Fig. 13A],
   - [Fig. 14] illustre, en perspective, l'empilement de la plaque terminale inférieure d'un empilement d'un ensemble conforme à l'invention,
   - [Fig. 15] est une vue de détails de [Fig. 14] représentant un dispositif de fixation,
   - [Fig. 16] et [Fig. 17] sont des vues de détails permettant de visualiser des détails de réalisation du dispositif de fixation,
   - [Fig. 18] représente, selon une vue en perspective, une variante de réalisation d'un élément de guidage,
   - [Fig. 19A] représente, selon une vue en perspective, une plaque d'appui supérieur et quatre éléments de guidage,
   - [Fig. 19B] est une vue agrandie selon B3 de [Fig. 19A] illustrant un dispositif de fixation,
   - [Fig. 20A] représente, selon une vue en perspective, une variante de réalisation d'un ensemble conforme à l'invention comportant un empilement de type SOEC/SOFC haute température et quatre éléments de guidage, utilisant la plaque d'appui supérieur de [Fig. 19A], et
   - [Fig. 20B] est une vue agrandie selon B4 de [Fig. 20A].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur », « inférieur », « horizontal » et « vertical » sont à comprendre ici selon le sens d'orientation normal d'un empilement de type SOEC/SOFC lorsque dans sa configuration d'utilisation.

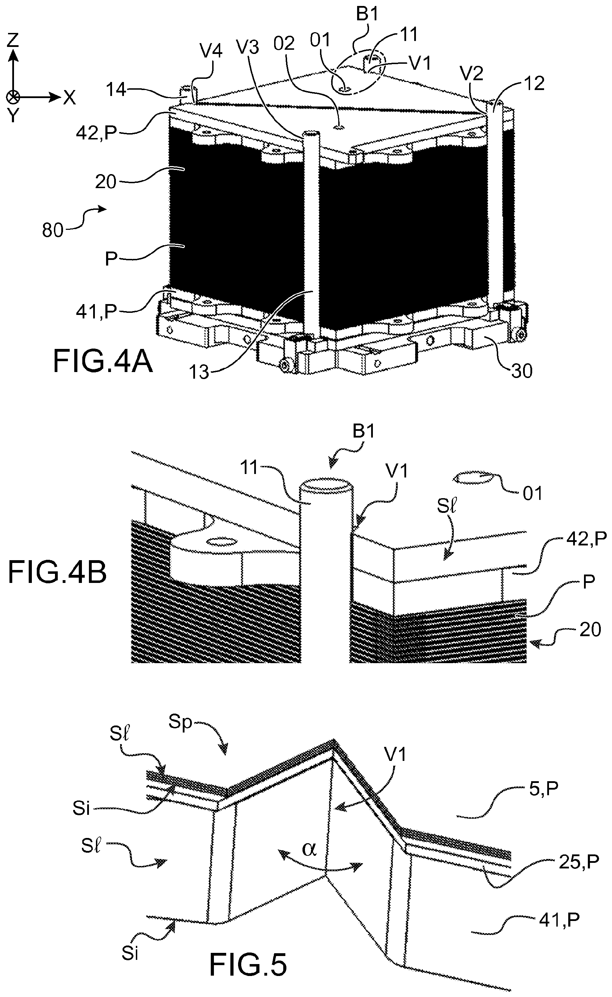

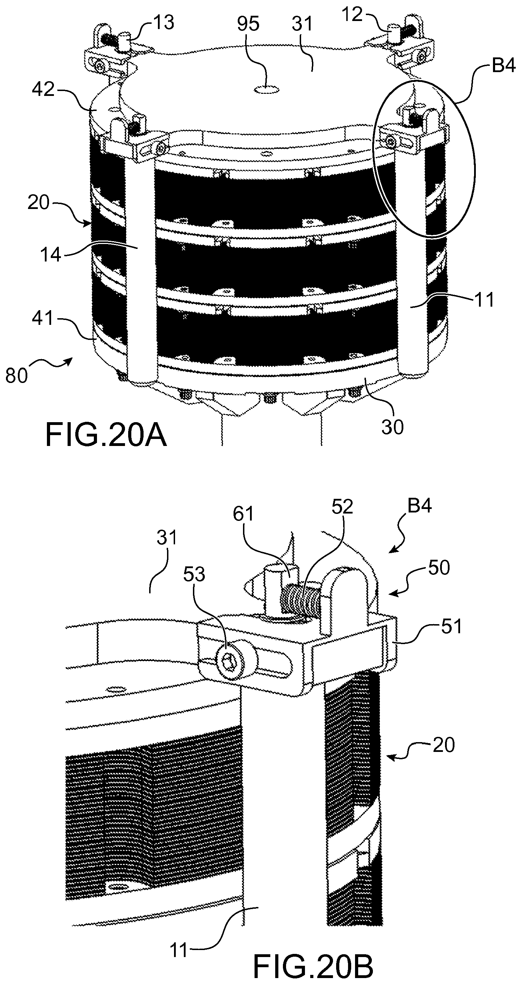

Les figures 4A à 20B permettent d'illustrer le principe de guidage externe conforme à l'invention. En comparaison avec un principe de guidage interne à un empilement ou stack, le guidage externe présente plusieurs avantages, et notamment pour des stacks de grandes hauteurs. Situé en périphérie, il peut simplifier l'intégration de passages de circuits de refroidissement placés dans les angles des stacks. De plus, la suppression des colonnes de guidage internes peut également permettre d'envisager plus aisément le conditionnement de plusieurs sous-stacks sous la même presse. En effet, dans une configuration intégrant un guidage interne, une fois que le stack a subi une diminution de hauteur, les colonnes dépassent de la plaque terminale supérieure interdisant la pose d'un second stack sur la plaque terminale supérieure. Pour cette raison, ce type de guidage interne ne permet pas la fabrication en simultané d'assemblage de plusieurs sous-stacks indépendants empilés les uns sur les autres sur le même banc. Par ailleurs, un des avantages du guidage externe selon l'invention peut aussi être le démontage aisé des colonnes de guidage qui permet une réduction de la taille du stack comparé à des guidages internes et qui ouvre de nouvelles possibilités de configuration géométrique ou design interne des stacks.

Ainsi, les figures 4A à 9 se rapportent à un premier exemple de réalisation d'un ensemble 80 conforme à l'invention comprenant un empilement 20 de cellules à oxydes solides de type SOEC/SOFC fonctionnant à haute température.

Cet empilement 20 est constitué d'une pluralité de plaques P empilées les unes sur les autres selon une direction verticale Z qui est perpendiculaire à chacune des plaques P étendues dans des plans horizontaux parallèles au plan horizontal d'axes X et Y, comme visible sur la figure 4A.

L'empilement 20 comporte une pluralité de cellules électrochimiques C1, C2 telles que définies précédemment, ici par exemple 100 cellules électrochimiques, formées chacune d'une cathode, d'une anode et d'un électrolyte intercalé entre la cathode et l'anode, et une pluralité d'interconnecteurs 5 agencés chacun entre deux cellules électrochimiques C1, C2 adjacentes. De plus, l'empilement 20 comporte une plaque terminale supérieure 42 et une plaque terminale inférieure 41, entre lesquelles la pluralité de cellules électrochimiques C1, C2 et la pluralité d'interconnecteurs 5 sont enserrées.

Une plaque P de l'empilement 20 peut être par exemple formée par une cellule électrochimique C1, C2, un interconnecteur 5, la plaque terminale supérieure 42, la plaque terminale inférieure 41 ou encore une plaque d'isolant 25, par exemple en mica, comme visible sur la figure 5. Chacune de ces plaques P comporte une surface supérieure Sp, une surface inférieure Si et une surface latérale externe SI, représentées notamment sur la figure 5. La surface latérale externe SI relie les surfaces supérieure Sp et inférieure Si.

Par ailleurs, pour réaliser le guidage externe des plaques P en empilement vertical, l'ensemble 80 conforme à l'invention comporte quatre éléments de guidage 11, 12, 13, 14, ici sous la forme de colonnettes de guidage. Le nombre de ces éléments de guidage peut notamment être compris entre 2 et 12, étant préférentiellement égal à 4.

Ces colonnettes de guidage 11, 12, 13 et 14 s'étendent verticalement selon la direction verticale Z en appui contre la surface latérale externe SI de chaque plaque P. Ainsi, le guidage externe est réalisé en prenant appui sur la ou les faces externes du stack.

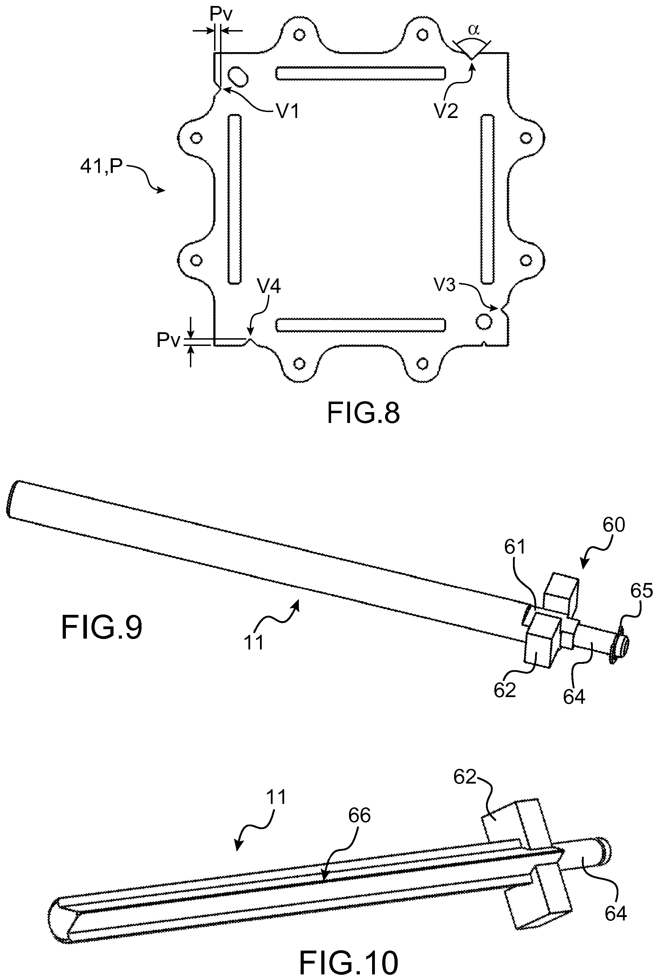

Dans cet exemple, chaque colonnette de guidage 11, 12, 13, 14 présente une forme cylindrique et une forme circulaire en section transversale par rapport à la direction verticale Z, comme visible par exemple sur la figure 9. En variante, toute autre forme serait possible, notamment carrée ou rectangulaire.

De plus, chaque plaque P du stack 20 est de forme sensiblement carrée avec une surface latérale SI comprenant ainsi quatre faces latérales. Sur chaque face latérale est formée une encoche V1, V2, V3, V4 dans laquelle vient en appui une colonnette de guidage 11, 12, 13, 14.

Ces quatre encoches V1, V2, V3 et V4 sont avantageusement sous la forme d'un « V » obtenu par formation de deux plans tangents sur la face latérale. En variante, toute autre forme est possible, notamment circulaire ou ovale. Il est également possible de ne pas avoir d'encoche formée sur les plaques P.

Ainsi, le guidage externe est réalisé ici par des appuis de type colonnettes cylindriques sur arêtes planes. Précisément, le guidage est obtenu en réalisant un appui entre une face cylindrique d'une colonnette et deux plans tangents obtenus par usinage d'une encoche en « V ».

Comme visible sur les figures 5 et 8 notamment, chaque encoche V1, V2, V3, V4 présente une forme de « V » qui définit un angle d'ouverture α compris entre 15° et 60°. Avantageusement, un même type d'encoche est réalisé sur toutes les plaques P constituant le stack 20. Le nombre d'encoches utilisées ici est de 4 pour garantir le guidage par un nombre de colonnettes 11, 12, 13, 14 équivalent. En variante, il peut être compris entre 2 et 12.

Par ailleurs, la profondeur Pv de la forme en « V » de chaque encoche V1, V2, V3, V4, définie comme la hauteur du « V », entre la surface latérale SI et la réunion des deux plans tangents, comme visible sur la figure 8, est comprise entre 2 mm et 15 mm, étant notamment de l'ordre de 10 mm. Cette profondeur Pv est ajustable en fonction des contraintes géométriques spécifiques du stack 20 et de la hauteur de guidage souhaitée. Aussi, selon la profondeur Pv choisie, plusieurs diamètres de colonnette de guidage peuvent être envisagés en conservant une géométrie permettant d'assurer un appui tangentiel entre la surface cylindrique et les plans d'appui formés par le « V » usiné sur les bords des plaques P. La position des encoches V1, V2, V3, V4 peut être choisie librement et s'adapter à la géométrie des plaques P, sous réserve que chacune des encoches soit préférentiellement associée à une autre encoche placée de façon sensiblement diamétralement (ou diagonalement) opposée.

Il est à noter qu'une forme différente d'un « V » peut être utilisée pour tout ou partie des encoches V1, V2, V3, V4, notamment une forme circulaire ou ovale. En particulier, une forme circulaire peut permettre d'avoir un seul point de contact de sorte à limiter les frottements par rapport à une forme en « V ». Avantageusement, il convient en outre que le diamètre de l'encoche, ou sa plus grande dimension transversale, soit supérieur à celui d'une colonnette de guidage.

Par ailleurs, afin de garantir un contact d'appui suffisant tout en s'accommodant des mouvements coplanaires des plaques P dus aux dilatations durant la phase de fabrication de la vitrocéramique de scellement, il est avantageux de fixer les colonnettes de guidage 11, 12, 13, 14 par le biais d'un dispositif de fixation 50 à une plaque d'appui inférieur 30 et/ou une plaque d'appui supérieur 31.

Plus précisément, afin d'assurer le guidage avec un appui continu des colonnettes 11, 12, 13, 14 sur les plaques P sans générer de contraintes importantes pouvant entraîner un arcboutement de celles-ci, les colonnettes sont montées sur au moins une plaque d'appui 30, 31 avec une interface permettant d'assurer les fonctions mécaniques suivantes : le maintien de la perpendicularité des colonnettes et leur blocage vertical ; la translation des colonnettes dans l'axe du déplacement des faces du stack ; et la mise en compression des éléments élastiques en appui sur les colonnettes.

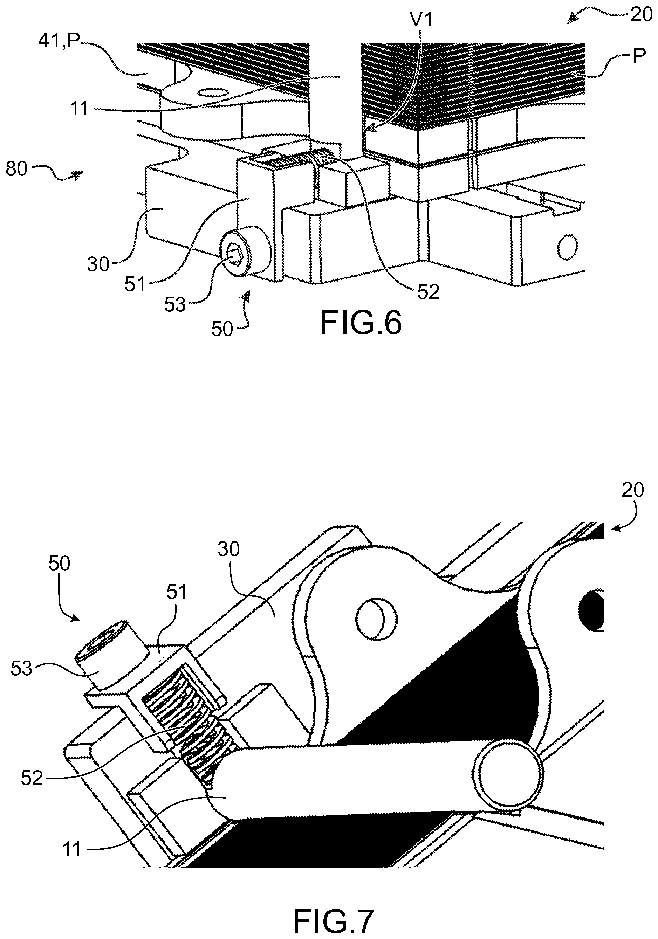

Dans cet exemple des figures 4A à 9, un dispositif de fixation 50 est prévu à la base de chaque colonnette de guidage 11, 12, 13, 14 pour assurer l'appui mécanique de la colonnette sur le stack 20 en intégrant un élément d'élasticité, comme visible sur les figures 6 et 7 notamment. Chaque dispositif de fixation 50 est donc fixé à la plaque d'appui inférieur 30 correspondant ici à la plaque support du banc de fabrication, soit le manifold.

Ainsi, chaque dispositif de fixation 50 comprend une embase de fixation 51 ou sabot, qui est solidarisée à la plaque d'appui inférieur 30, un organe de rappel élastique de compression 52, ici un ressort de compression (ou en variante un train de rondelles), dont une extrémité est au contact de la colonnette de guidage 11, 12, 13, 14 et l'autre extrémité est au contact de l'embase de fixation 51, et une vis de fixation 53 montée sur l'embase 51, cette vis de fixation 53 permettant la fixation et le réglage.

L'essentiel du mouvement vertical d'affaissement du stack 20 observé sur les stacks durant la phase de formation de la vitrocéramique se déroule dans une gamme de température comprise entre 650°C et 750°C. Ces températures, qui sont inférieures à la température maximale atteinte lors du cycle de fabrication, permettent d'envisager l'utilisation de ressorts de compression 52 métalliques conservant des caractéristiques mécaniques encore suffisantes pour assurer un effort de compression. Ainsi, les ressorts de compression 52 peuvent par exemple être réalisés en superalliages métalliques à base de Nickel, par exemple en Inconel^{®} 718 ou 750, utilisés industriellement pour la fabrication de ressorts pour des applications à très hautes températures. De plus, la chute drastique des propriétés élastiques et mécaniques du matériau constitutif du ressort pour des températures supérieures à 750°C n'est pas problématique en soit, dans la mesure où les mouvements du stack 20 au-delà de cette température sont faibles, relâchant ainsi les contraintes de guidage. Les ressorts de compression 52 peuvent être de type fusible à usage unique assurant leur fonction mécanique pour des températures inférieures à 750°C. Ils peuvent ainsi être réalisés en tout matériau conservant de bonnes propriétés d'élasticité et présentant un faible fluage à ces températures. Par exemple, les ressorts de compression 52 peuvent encore être réalisés en superalliages métalliques de type Haynes^{®} 230^{®}, ou encore en céramique, par exemple obtenus par le biais de la fabrication additive.

En outre, pour que chaque colonnette de guidage 11, 12, 13, 14 soit encastrée et fixée dans la plaque d'appui inférieur 30, ou plaque d'appui du banc de fabrication, voire également dans la plaque terminale inférieure 41, la colonnette est également modifiée à sa base.

Ainsi, comme visible notamment sur la figure 9, chaque élément de guidage 11, 12, 13, 14 comporte un dispositif d'appui 60 coopérant avec le dispositif de fixation 50. Ce dispositif d'appui 60 comporte un plan d'appui 61, de forme aplatie, pour permettre l'appui du ressort de compression 52, et une embase d'appui 62 qui vient au contact de la plaque d'appui inférieur 30. En outre, l'extrémité inférieure de la colonnette correspond à un téton de guidage inférieur 64 sur lequel est prévu un anneau de blocage 65 de type circlip.

Pour ce type de montage, la position et les jeux relatifs entre colonnettes 11, 12, 13, 14 et plaques P du stack 20 sont à dimensionner au regard des dilatations des différents éléments du montage. Le matériau d'une colonnette de guidage peut être constitué préférentiellement par un matériau présentant le même coefficient de dilatation que le stack 20, soit par exemple un acier ferritique, par exemple de type VDM^{®} Crofer ou K41^{®}, et préférentiellement également du même matériau que la plaque d'appui inférieur 30 ou plaque support du banc de fabrication.

Avantageusement, chaque colonnette de guidage 11, 12, 13, 14 présente un point de contact le plus ponctuel possible pour limiter les frottements. Pour assurer ce point de contact, des colonnettes de forme circulaire en section transversale, comme sur la figure 9, peuvent être choisies. En variante, comme l'illustre la figure 10, des colonnettes de forme triangulaire ou en l'occurrence semi-triangulaire et semi-circulaire peuvent être utilisées. Dans ce cas, la colonnette présente une arête d'appui 66 qui peut venir directement au contact de la surface latérale SI d'une plaque P, sans nécessité de former une encoche sur celle-ci.

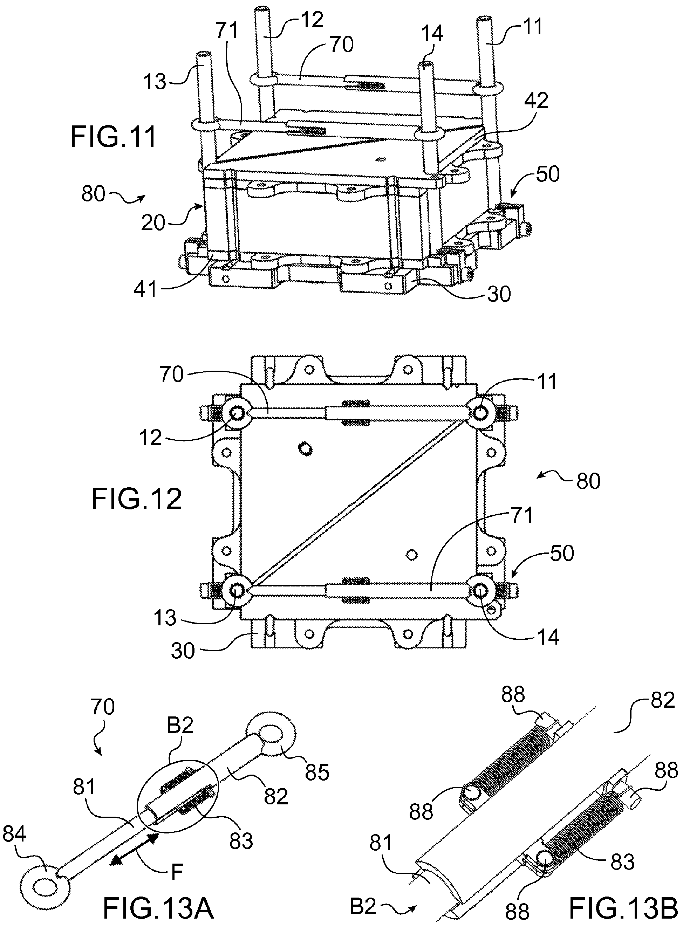

Par ailleurs, le guidage peut être réalisé de telle sorte que les colonnettes 11, 12, 13, 14 soient maintenues en place à l'aide d'un élément d'élasticité supplémentaire, comme illustré par les figures 11 à 13B.

Ainsi, deux colonnettes de guidage 11, 12 et 13, 14 peuvent être maintenues solidaires ensemble par le biais d'un élément d'élasticité, respectivement 70 et 71 s'étendant transversalement par rapport à la direction verticale Z.

Ces éléments d'élasticité 70 et 71 peuvent être choisis pour conserver leur élasticité le plus haut possible et au moins jusqu'à 750°C.

Ainsi, chaque élément d'élasticité 70, 71 comporte une barre coulissante 81, selon la double-flèche F visible sur la figure 13A, pourvue d'une extrémité 84 sous la forme d'un anneau de montage fixé à une colonnette 12 ou 13, et apte à coulisser à l'intérieur d'une barre fixe 82, pourvue d'une extrémité 85 sous la forme d'un anneau de montage également fixé à une autre colonnette 11 ou 14.

Ces barres coulissantes 81 et fixe 82 sont reliées entre elles par le biais de ressorts de traction 83 montés sur des pions 88 de ces barres 81, 82.

Avantageusement, ces éléments d'élasticité 70, 71 permettent de maintenir les colonnettes parallèles entre elles pendant l'empilement. Ils permettent d'éviter ou de limiter de potentiels écartements et déformations des colonnettes lors des mouvements de stack. Ils peuvent être de type fusible et constitués du même matériau haute température que les colonnettes.

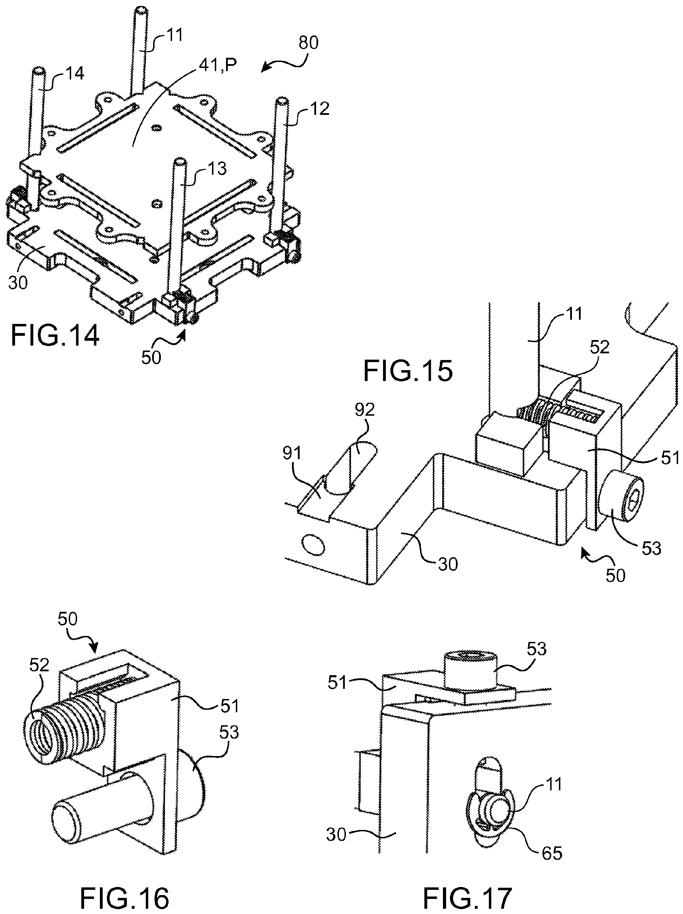

Les figures 14 à 17 illustrent l'empilement de la plaque terminale inférieure 41 sur la plaque d'appui inférieur 30 et la fixation des colonnettes 11, 12, 13 et 14 sur la plaque d'appui inférieur 30 par le biais de quatre dispositifs de fixation 50.

En complément de ce qui a été décrit précédemment, on peut voir sur la figure 15 que la plaque d'appui inférieur 30 comporte un lamage 92 et un méplat 91 pour permettre le guidage de la colonnette et de l'embase 51 ou sabot. L'embase 51 assure la perpendicularité de la colonnette et le téton de guidage 64, usiné pour recevoir le circlip 65 (ou tout autre équivalent, par exemple une goupille ou un anneau de serrage), est inséré dans le lamage 92 pour assurer le blocage vertical, en dépassement par rapport à l'épaisseur de la plaque 30.

Ce montage tel qu'illustré aux figures 14 à 17 permet de réaliser le centrage du stack 20 sur le banc de sorte à permettre une mise en place initiale du montage dans l'axe de l'effort appliqué. La perpendicularité est assurée par l'embase 62 et le blocage par le biais de l'anneau 65 monté sur l'extrémité de la colonnette qui dépasse de la plaque 30. Le mouvement de translation guidé de la colonnette est assuré par le coulissement de l'embase 62 dans une lumière oblongue, ou lamage 92, usinée dans la plaque 30. Le maintien et la mise en compression du ressort de compression 52 est assuré par l'embase de fixation 51 dont la position est bloquée latéralement par le méplat 91. La vis 53 permet d'ajuster le niveau de compression du ressort 52.

L'ensemble 80 est destiné à l'assemblage d'un stack 20 pour assurer le guidage durant un cycle thermique de formation du scellement vitrocéramique. Pour permettre son utilisation dans le cadre de cycles de conditionnement incluant une mise sous tension du stack, chaque colonnette 11, 12, 13, 14 peut être réalisée en au moins un matériau isolant électriquement pour éviter la mise en court-circuit des différents étages du stack. Tout matériau isolant peut être utilisé, comme un matériau céramique, par exemple alumine, macor^{®}, entre autres, ou un matériau métallique devenant isolant après passage en température, de type aluminoformage, ainsi que tout matériau initialement conducteur mais recouvert d'une couche isolante.

Préférentiellement, chaque colonnette de guidage 11, 12, 13, 14 peut être réalisée en VDM^{®} Crofer pour permettre d'avoir des coefficients de dilatation thermique identiques à ceux du stack 20 et peut être recouverte d'une couche de matériau isolant résistant aux températures élevées, par exemple de type zircone yttriée.

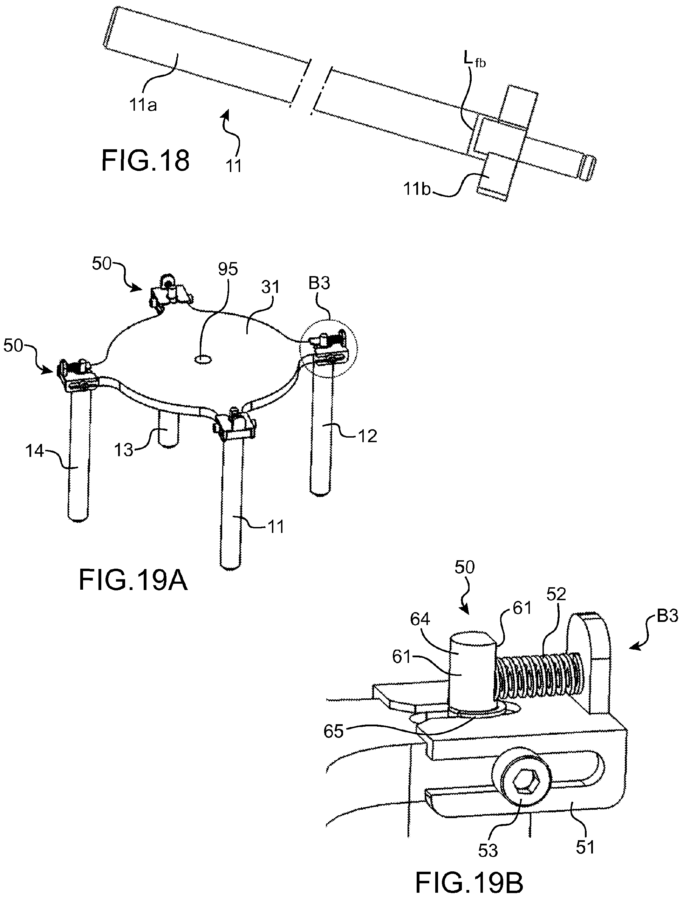

En variante, chaque colonnette 11, 12, 13, 14 peut encore être réalisée en deux parties comme illustré par la figure 18. Ainsi, à titre d'exemple, la colonnette 11 peut comporter une première partie 11a réalisée par exemple en alumine et une deuxième partie 11b métallique, les deux parties étant reliées par une liaison filetée, soudée ou brasée Lfb.

Par ailleurs, le principe de fixation décrit précédemment sur la plaque d'appui inférieur 30 peut également être appliqué pour une plaque d'appui supérieur 31 comme illustré par les figures 19A à 20B pour une géométrie de stack 20 de type cylindrique.

La plaque d'appui supérieur 31 comporte une embase centrale 95 de la rotule d'appui, et quatre dispositifs de fixation 50 permettant de fixer les quatre colonnettes de guidage 11, 12, 13 et 14.

Dans cette géométrie cylindrique du stack 20, les colonnettes peuvent être en appui direct sur les surfaces latérales SI des plaques P sans nécessiter la présence d'encoches. Avec ce type d'appui, des diamètres de colonnettes plus importants peuvent également être utilisés. A noter que ce type de configuration, posée sur le dessus du stack 20 plutôt que solidaire de la plaque d'appui inférieur 30, peut également s'adapter à des stacks à bords droits, comme décrit précédemment.

## Revendications

1. Ensemble (80) comportant :
- un empilement (20) de cellules à oxydes solides de type SOEC/SOFC fonctionnant à haute température, constitué d'une pluralité de plaques (P) empilées les unes sur les autres selon une direction verticale (Z) sensiblement perpendiculaire à chaque plan horizontal d'étendue de chaque plaque (P), chaque plaque (P) comportant une surface supérieure (Sp), une surface inférieure (Si) et une surface latérale externe (SI),
ladite pluralité de plaques (P) comportant au moins :
- une pluralité de cellules électrochimiques (C1, C2) formées chacune d'une cathode, d'une anode et d'un électrolyte intercalé entre la cathode et l'anode, et une pluralité d'interconnecteurs (5) agencés chacun entre deux cellules électrochimiques (C1, C2) adjacentes,
- une plaque terminale supérieure (42) et une plaque terminale inférieure (41), entre lesquelles la pluralité de cellules électrochimiques (C1, C2) et la pluralité d'interconnecteurs (5) sont enserrées,
- au moins deux éléments de guidage (11, 12, 13, 14) assurant le guidage en empilement vertical d'au moins une partie des plaques (P) de l'empilement (20),
**caractérisé en ce que** lesdits au moins deux éléments de guidage (11, 12, 13, 14) s'étendent verticalement selon la direction verticale (Z) en appui contre la surface latérale externe (SI) de chaque plaque (P) de ladite au moins une partie des plaques (P),
dans lequel lesdits au moins deux éléments de guidage (11, 12, 13, 14) sont fixés par le biais d'un dispositif de fixation (50) à une plaque d'appui inférieur (30) sur laquelle est placé l'empilement (20) et/ou à une plaque d'appui supérieur (31) sous laquelle est placé l'empilement (20), et le dispositif de fixation (50) comporte une embase de fixation (51), solidarisée à la plaque d'appui inférieur (30) et/ou à la plaque d'appui supérieur (31), un organe de rappel élastique de compression (52), dont une extrémité est au contact d'un élément de guidage (11, 12, 13, 14) et l'autre extrémité est au contact de l'embase de fixation (51), et une vis de fixation (53) montée sur l'embase (51).

2. Ensemble selon la revendication 1, **caractérisé en ce que** l'organe de rappel élastique de compression (52) est réalisé en alliage métallique, notamment en superalliage métallique, notamment à base de Nickel, ou encore en céramique, par exemple par fabrication additive.

3. Ensemble selon la revendication 1 ou 2, **caractérisé en ce que** chaque élément de guidage (11, 12, 13, 14) comporte un dispositif d'appui (60) coopérant avec le dispositif de fixation (50), comportant au moins un plan d'appui (61) de l'organe de rappel élastique de compression (52) et une embase d'appui (62) au contact de la plaque d'appui inférieur (30) et/ou la plaque d'appui supérieur (31).

4. Ensemble selon l'une quelconque des revendications précédentes, **caractérisé en ce que** lesdits au moins deux éléments de guidage (11, 12, 13, 14) sont au moins en partie de forme sensiblement cylindrique et présentent, en section transversale par rapport à la direction verticale (Z), une forme sensiblement circulaire, triangulaire, triangulaire et semi-circulaire, carrée et/ou rectangulaire.

5. Ensemble selon l'une quelconque des revendications précédentes, **caractérisé en ce que** chaque plaque (P) de ladite au moins une partie des plaques (P) comporte au moins deux encoches (V1, V2, V3, V4) formées sur la surface latérale (SI) de la plaque (P) dans lesquelles viennent en appui lesdits au moins deux éléments de guidage (11, 12, 13, 14), notamment de forme circulaire, ovale ou en « V ».

6. Ensemble selon la revendication 5, **caractérisé en ce que** chaque encoche (V1, V2, V3, V4) d'au moins une partie des encoches (V1, V2, V3, V4) présente une forme de « V » obtenue par la formation de deux plans tangents sur la surface latérale (SI) de la plaque (P).

7. Ensemble selon la revendication 6, **caractérisé en ce que** la forme de « V » définit un angle (α) compris entre 15° et 60°.

8. Ensemble selon la revendication 6 ou 7, **caractérisé en ce que** la profondeur (Pv) de la forme de « V », définie comme la hauteur du « V », entre la surface latérale (SI) et la réunion des deux plans tangents, est comprise entre 2 mm et 15 mm, notamment de l'ordre de 10 mm.

9. Ensemble selon l'une quelconque des revendications précédentes, **caractérisé en ce que** le nombre desdits au moins deux éléments de guidage (11, 12, 13, 14) est compris entre 2 et 12, notamment égal à 4.

10. Empilement selon l'une quelconque des revendications précédentes, **caractérisé en ce qu'**au moins deux éléments de guidage (11, 12 ; 13, 14) sont maintenus solidaires ensemble par le biais d'au moins un élément d'élasticité (70, 71) s'étendant sensiblement transversalement par rapport à la direction verticale (Z).

11. Empilement selon la revendication 10, **caractérisé en ce que** chaque élément d'élasticité (70, 71) comporte un élément coulissant (81) pourvu d'une extrémité (84) fixée à un élément de guidage (11, 12, 13, 14), apte à coulisser à l'intérieur d'un élément fixe (82), pourvu d'une extrémité (85) fixée à un autre élément de guidage (11, 12, 13, 14), les éléments coulissant (81) et fixe (82) étant reliés entre eux par le biais d'au moins un organe de rappel élastique de traction (83).

12. Empilement selon l'une quelconque des revendications précédentes, **caractérisé en ce que** lesdits au moins deux éléments de guidage (11, 12, 13, 14) sont réalisés en au moins un matériau isolant électriquement.

13. Procédé de conditionnement d'un empilement (20) de cellules à oxydes solides de type SOEC/SOFC fonctionnant à haute température d'un ensemble (80) selon l'une quelconque des revendications précédentes, **caractérisé en ce qu'**il comporte l'étape de guidage en empilement vertical d'au moins une partie des plaques (P) constitutives de l'empilement (20) par le biais desdits au moins deux éléments de guidage (11, 12).

## Patentansprüche

1. Baugruppe (80), die Folgendes aufweist:
- eine Stapelung (20) von bei hoher Temperatur arbeitenden Festoxidzellen vom Typ SOEC/SOFC, bestehend aus einer Vielzahl von Platten (P), die in vertikaler Richtung (Z) im Wesentlichen senkrecht zu jeder horizontalen Ausdehnungsebene jeder Platte (P) aufeinander gestapelt sind, wobei jede Platte (P) eine Oberseite (Sp), eine untere Fläche (SI) und eine äußere Seitenfläche (SI) aufweist,
wobei die Vielzahl von Platten (P) mindestens Folgendes aufweist:
- eine Vielzahl von elektrochemischen Zellen (C1, C2), die jeweils aus einer Kathode, einer Anode und einem zwischen Kathode und Anode eingelegten Elektrolyt gebildet sind, und eine Vielzahl von Zwischenverbindern (5), die jeweils zwischen zwei benachbarten elektrochemischen Zellen (C1, C2) angeordnet sind,
- eine obere Endplatte (42) und eine untere Endplatte (41), zwischen denen die Vielzahl von elektrochemischen Zellen (C1, C2) und die Vielzahl von Zwischenverbindern (5) eingeklemmt sind,
- mindestens zwei Führungselemente (11, 12, 13, 14), die die vertikale Führung der Stapelung von mindestens einem Teil der Platten (P) der Stapelung (20) gewährleisten,
**dadurch gekennzeichnet, dass** sich die mindestens zwei Führungselemente (11, 12, 13, 14) vertikal in vertikaler Richtung (Z) an der äußeren Seitenfläche (SI) jeder Platte (P) des mindestens einen Teils der Platten (P) anliegend erstrecken,
wobei die mindestens zwei Führungselemente (11, 12, 13, 14) über eine Befestigungsvorrichtung (50) an einer unteren Auflageplatte (30), auf der die Stapelung (20) platziert ist, und/oder an einer oberen Auflageplatte (31), unter der die Stapelung (20) platziert ist, befestigt sind, und die Befestigungsvorrichtung (50) einen mit der unteren Auflageplatte (30) und/oder der oberen Auflageplatte (31) verbundenen Befestigungsfuß (51), ein druckelastisches Rückstellorgan (52), dessen eines Ende mit einem Führungselement (11, 12, 13, 14) und dessen anderes Ende mit dem Befestigungssockel (51) in Kontakt ist, und eine Befestigungsschraube (53) aufweist, die am Sockel (51) montiert ist.

2. Baugruppe nach Anspruch 1, **dadurch gekennzeichnet, dass** das elastische Druckrückstellorgan (52) aus einer Metalllegierung, insbesondere aus einer Metallsuperlegierung, insbesondere auf Nickelbasis, oder aus Keramik, beispielsweise durch additive Fertigung, hergestellt ist.

3. Baugruppe nach Anspruch 1 oder 2, **dadurch gekennzeichnet, dass** jedes Führungselement (11, 12, 13, 14) eine mit der Befestigungsvorrichtung (50) zusammenwirkende Stützvorrichtung (60) aufweist, die mindestens eine Auflagefläche (61) des elastischen Druckrückstellorgans (52) und einen Auflagefuß (62) in Kontakt mit der unteren Stützplatte (30) und/oder der oberen Stützplatte (31) aufweist.

4. Baugruppe nach einem der vorhergehenden Ansprüche, **dadurch gekennzeichnet, dass** die mindestens zwei Führungselemente (11, 12, 13, 14) mindestens teilweise im Wesentlichen zylindrisch geformt sind und in dem Querschnitt zu der vertikalen Richtung (Z) eine im Wesentlichen kreisförmige, dreieckige, dreieckige und halbrunde, quadratische und/oder rechteckige Form beinhalten.

5. Baugruppe nach einem der vorhergehenden Ansprüche, **dadurch gekennzeichnet, dass** jede Platte (P) des mindestens einen Teils der Platten (P) mindestens zwei Kerben (V1, V2, V3, V4) aufweist, die an der Seitenfläche (SI) der Platte (P) ausgebildet sind und in denen die mindestens zwei Führungselemente (11, 12, 13, 14), die insbesondere kreisförmig, oval oder "V"-förmig sind, aufliegen.

6. Baugruppe nach Anspruch 5, **dadurch gekennzeichnet, dass** jede Kerbe (V1, V2, V3, V4) mindestens eines Teils der Kerben (V1, V2, V3, V4) eine "V"-Form beinhaltet, die durch die Bildung von zwei tangentialen Ebenen auf der Seitenfläche (SI) der Platte (P) erreicht wird.

7. Baugruppe nach Anspruch 6, **dadurch gekennzeichnet, dass** die "V"-Form einen Winkel (α) zwischen 15° und 60° definiert.

8. Baugruppe nach Anspruch 6 oder 7, **dadurch gekennzeichnet, dass** die Tiefe (Pv) der "V"-Form, definiert als die Höhe des "V", zwischen der Seitenfläche (SI) und dem Zusammentreffen der beiden tangentialen Ebenen zwischen 2 mm und 15 mm, insbesondere im Bereich von 10 mm, liegt.

9. Baugruppe nach einem der vorhergehenden Ansprüche, **dadurch gekennzeichnet, dass** die Anzahl der mindestens zwei Führungselemente (11, 12, 13, 14) zwischen 2 und 12, insbesondere gleich 4, liegt.

10. Stapelung nach einem der vorhergehenden Ansprüche, **dadurch gekennzeichnet, dass** mindestens zwei Führungselemente (11, 12; 13, 14) durch mindestens ein sich im Wesentlichen quer zu der vertikalen Richtung (Z) erstreckendes Elastizitätselement (70, 71) fest miteinander verbunden gehalten werden.

11. Stapelung nach Anspruch 10, **dadurch gekennzeichnet, dass** jedes Elastizitätselement (70, 71) ein Gleitelement (81) aufweist, das mit einem Ende (84) versehen ist, das an einem Führungselement (11, 12, 13, 14) befestigt ist und innerhalb eines festen Elements (82) gleiten kann, das mit einem Ende (85) versehen ist, das an einem anderen Führungselement (11, 12, 13, 14) befestigt ist, wobei das Gleitelement (81) und das feste Element (82) über mindestens ein elastisches Zugrückstellelement (83) miteinander verbunden sind.

12. Stapelung nach einem der vorhergehenden Ansprüche, **dadurch gekennzeichnet, dass** die mindestens zwei Führungselemente (11, 12, 13, 14) aus mindestens einem elektrisch isolierenden Material hergestellt sind.

13. Verfahren zum Konditionieren einer Stapelung (20) von bei hoher Temperatur arbeitenden Festoxidzellen vom Typ SOEC/SOFC einer Baugruppe (80) nach einem der vorhergehenden Ansprüche, **dadurch gekennzeichnet, dass** es den Schritt der vertikalen Stapelführung des mindestens einen Teils der Platten (P), die die Stapelung (20) bilden, durch die mindestens zwei Führungselemente (11, 12) aufweist.

## Claims

1. An assembly (80) including:
- a stack (20) of SOEC/SOFC-type solid-oxide cells operating at high temperature, consisting of a plurality of plates (P) stacked on top of one another according to a vertical direction (Z) substantially perpendicular to each horizontal plane of extent of each plate (P), each plate (P) including an upper surface (Sp), a lower surface (Si) and an outer lateral surface (SI),
said plurality of plates (P) including at least:
- a plurality of electrochemical cells (C1, C2) each formed by a cathode, an anode and an electrolyte interposed between the cathode and the anode, and a plurality of interconnectors (5) each arranged between two adjacent electrochemical cells (C1, C2),
- an upper end plate (42) and a lower end plate (41), between which the plurality of electrochemical cells (C1, C2) and the plurality of interconnectors (5) are sandwiched,
- at least two guiding elements (11, 12, 13, 14) ensuring guidance into a vertical stack of at least part of the plates (P) of the stack (20),
**characterized in that** said at least two guiding elements (11, 12, 13, 14) extend vertically according to the vertical direction (Z) bearing against the outer lateral surface (SI) of each plate (P) of said at least part of the plates (P),
wherein said at least two guiding elements (11, 12, 13, 14) are fastened by means of a fastening device (50) to a lower support plate (30) on which the stack (20) is placed and/or to an upper support plate (31) under which the stack (20) is placed, and the fastening device (50) includes a fastening base (51), secured to the lower support plate (30) and/or to the upper support plate (31), a compressive elastic return member (52), one end of which is in contact with a guiding element (11, 12, 13, 14) and the other end is in contact with the fastening base (51), and a fastening screw (53) mounted on the base (51).

2. The assembly according to claim 1, **characterized in that** the compressive elastic return member (52) is made of a metal alloy, in particular of a metal superalloy, in particular nickel-based, or made of ceramic, for example by additive manufacturing.

3. The assembly according to claim 1 or 2, **characterized in that** each guiding element (11, 12, 13, 14) includes a support device (60) cooperating with the fastening device (50), including at least one support plane (61) of the compressive elastic return member (52) and a support base (62) in contact with the lower support plate (30) and/or the upper support plate (31).

4. The assembly according to any one of the preceding claims, **characterized in that** said at least two guiding elements (11, 12, 13, 14) have at least partially a substantially cylindrical shape and having, in cross-section with respect to the vertical direction (Z), a substantially circular, triangular, triangular and semi-circular, square and/or rectangular shape.

5. The assembly according to any one of the preceding claims, **characterized in that** each plate (P) of said at least part of the plates (P) includes at least two notches (V1, V2, V3, V4) formed over the lateral surface (SI) of the plate (P) in which said at least two guiding elements (11, 12, 13, 14), in particular circular, oval or "V"-like shaped, bear.

6. The assembly according to claim 5, **characterized in that** each notch (V1, V2, V3, V4) of at least part of the notches (V1, V2, V3, V4) has a "V"-like shape obtained by forming two planes tangent on the lateral surface (SI) of the plate (P).

7. The assembly according to claim 6, **characterized in that** the "V"-like shape defines an angle (α) comprised between 15° and 60°.

8. The assembly according to claim 6 or 7, **characterized in that** the depth (Pv) of the "V"-like shape, defined as the height of the "V", between the lateral surface (SI) and the intersection of the two tangent planes, is comprised between 2 mm and 15 mm, in particular in the range of 10 mm.

9. The assembly according to any one of the preceding claims, **characterized in that** the number of said at least two guiding elements (11, 12, 13, 14) is comprised between 2 and 12, in particular equal to 4.

10. The assembly according to any one of the preceding claims, **characterized in that** said at least two guide elements (11, 12; 13, 14) are held secured together by means of at least one elastic element (70, 71) extending substantially transversally with respect to the vertical direction (Z).

11. The stack according to claim 10, **characterized in that** each elastic element (70, 71) includes a sliding element (81) provided with one end (84) fastened to a guiding element (11, 12, 13, 14), able to slide inside a fixed element (82), provided with one end (85) fastened to another guiding element (11, 12, 13, 14), the sliding (81) and fixed (82) elements being connected together by means of at least one tensile elastic return member (83).

12. The stack according to any one of the preceding claims, **characterized in that** said at least two guiding elements (11, 12, 13, 14) are made of at least one electrically-insulating material.

13. A method for conditioning a stack (20) of SOFC/SOFT-type solid-oxide cells operating at high temperature of an assembly (80) according to any one of the preceding claims, **characterized in that** it includes the step of guiding into a vertical stack at least part of the plates (P) making up the stack (20) by means of said at least two guiding elements (11, 12).
